# EUROPEAN PATENT APPLICATION

(11) **EP 4 806 257 A1**
(43) Date of publication of application: **16.09.2026**
(21) Application number: 24888743.2
(22) Date of filing: 06.11.2024
(51) Int. Cl.: A01G 7/00, A01D 46/30, A01M 7/00

(54) **CROP OBSERVATION DEVICE, CONTROL METHOD FOR CROP OBSERVATION DEVICE, AND CONTROL PROGRAM FOR CROP OBSERVATION DEVICE**

(30) Priority: 09.11.2023 JP 2023191534
(71) Applicant: OMRON Corporation, Kyoto-shi, Kyoto 600-8530 (JP)
(72) Inventor: OGUSHI, Takahiro, Kyoto-shi, Kyoto 600-8530 (JP); KATO, Yutaro, Kyoto-shi, Kyoto 600-8530 (JP); SUGIOKA, Masayuki, Kyoto-shi, Kyoto 600-8530 (JP); NARA, Yusuke, Kyoto-shi, Kyoto 600-8530 (JP)
(74) Representative: Marks & Clerk LLP
(86) International application number: PCT/JP2024/039467
(87) International publication number: WO 2025/100450

(57) **Abstract**

A crop observation device includes a camera unit that is mounted in a mobile body moving in a field, and captures an image of a crop being an observation target, in accordance with a movement of the mobile body, and an exposure adjustment unit that adjusts exposure in the camera unit. The exposure adjustment unit outputs a speed change signal for changing a moving speed of the mobile body or an adjustment state signal relating to an adjustment state of the exposure, based on the adjustment state of the exposure. According to such a configuration, it is possible to provide a crop observation device and the like capable of preventing an omission in the observation of a targeted agricultural crop, even in a variously changing environment.

## Description

### TECHNICAL FIELD

The present invention relates to a crop observation device, a method of controlling a crop observation device, and a control program for a crop observation device.

### BACKGROUND ART

In recent years, the use of information technology (IT) techniques has rapidly increased in agriculture. As an example of such IT techniques, a technique has been developed in which an image of an agricultural crop planted in a field is captured by a camera unit to recognize a growth state at an appropriate time (for example, see Patent Document 1).

### CITATION LIST

### PATENT LITERATURE

Patent Document 1: JP 2023-095736 A

### SUMMARY OF INVENTION

### TECHNICAL PROBLEM

When a large number of camera units are installed in a field in which an agricultural crop to be observed is planted, an imaging condition specific for a certain observation target can be set to obtain a captured image that is suitable for observation. However, in order to recognize the growth state of an agricultural crop without omission, especially for a wide field, a vast number of camera units are required, so the operation cost increases and also, the size of the system increases.

Therefore, a method is being developed in which a camera unit is mounted on a mobile robot autonomously moving in a field, and while the mobile robot is caused to move autonomously, captured images of an observation target are sequentially acquired. However, in such a method, the observation target sequentially changes as the mobile robot moves, and thus, it is necessary to sequentially adjust the imaging conditions of the camera unit. For example, if a fruit hanging from a branch is imaged from below, the imaging range may include a region of the sky together with the fruit, and the brightness difference in the angle of view is great. Therefore, in order to acquire an appropriate image, it may take time to adjust the exposure until imaging is executed.

If the exposure adjustment takes time, the mobile robot continues to move during the exposure adjustment, and thus, passes by an agricultural crop included in the observation target, so that it is not possible to acquire a captured image of the agricultural crop. If it is not possible to acquire a captured image of even a part of the agricultural crop that is the observation target, it may not be possible to accurately recognize the growth state of the entire field, estimate the yield, and the like, or find a growth defect in a certain location.

The present invention has been made to solve the above-described problems and provides a crop observation device and the like capable of preventing an omission in the observation of a targeted agricultural crop, even in a variously changing environment.

### SOLUTION TO PROBLEM

A crop observation device according to a first aspect of the present invention includes a camera unit mounted in a mobile body moving in a field and configured to capture an image of a crop being an observation target, in accordance with a movement of the mobile body, and an exposure adjustment unit configured to adjust exposure of the camera unit, and the exposure adjustment unit outputs a speed change signal for changing a moving speed of the mobile body, based on an adjustment state of the exposure. According to the crop observation device having such a configuration, when it takes time to adjust the exposure, the moving speed of the mobile body is decreased or the mobile body is stopped, and thus, it is possible to reliably capture an image of a targeted crop without omission. Furthermore, if the exposure adjustment is orderly performed, the moving speed of the mobile body can be restored, which contributes to a reduction of the work time.

In the above-described crop observation device, the exposure adjustment unit may recognize a sky region in which a sky is imaged, from a captured image output by the camera unit, and allow overexposure of the sky region to adjust the exposure. Even if a sky region is included when the image is captured from below, the region may be overexposed as long as the crop observation device according to the present invention can capture an image of a target crop with appropriate exposure. By relaxing the exposure adjustment conditions as described above, it is possible to expect an increase in the speed of the exposure adjustment. On the other hand, it is desirable that the exposure adjustment unit adjusts the exposure while preventing a non-sky region other than the sky region from being blacked out. In many cases, the region other than the sky region is occupied by an agricultural crop to be observed. Therefore, even if determination whether the non-sky region is exactly a region of the agricultural crop is not performed, when appropriately adjusting the exposure of the non-sky region, it is possible to expect an increase in the speed of the exposure adjustment as a result.

The exposure adjustment unit may recognize the sky region by detecting a difference between a plurality of the captured images captured using different imaging conditions and continuously output by the camera unit. The captured images to be used for adjusting the exposure can be continuously acquired during the exposure adjustment, and thus, can be utilized to accurately recognize the sky region. The exposure adjustment unit may correct the recognition of the sky region, based on an indicated region indicated by a user with respect to the captured image. By using such correction operation, it is possible to prevent a crop region exposed to direct sunlight from being recognized as a sky region, for example. The exposure adjustment unit may correct the recognition of the sky region, based on an index designated by a user in relation to the crop appearing in the captured image. For example, in a case in which the number of fruits within the angle of view is used as an index, when the number of fruits counted from the captured image by the exposure adjustment unit is different from the number of fruits designated by a user observing the captured image, the exposure adjustment unit corrects the recognition by enlarging or reducing the sky region so that the above-mentioned numbers of fruits coincide with each other. By performing such a correction operation, the exposure adjustment unit can recognize a more appropriate range as the sky region.

The above-described crop observation device may include a plurality of the camera units, and an image processing unit configured to set a fixed white balance common to the plurality of camera units, and the exposure adjustment unit may be configured to individually adjust the exposure in each of the camera units. Even when a plurality of camera units are provided, it is preferable that the white balance of each of the acquired captured images is common in consideration of a subsequent analysis process or the like. On the other hand, each camera unit captures a different agricultural crop, and thus, it is preferable that the exposure adjustment is individually adjusted.

The above-described crop observation device may include an illuminance sensor configured to acquire illuminance information in a movement direction of the mobile body, and the exposure adjustment unit may adjust the exposure by using the illuminance information. In many cases, the mobile body includes a sensor such as a camera that acquires environmental information in a movement direction. Such a sensor can substantially function as an illuminance sensor, so that the exposure adjustment unit can use the illuminance information to temporarily set an exposure adjustment value in accordance with environmental illuminance in advance. Consequently, the exposure adjustment can be completed faster.

The above-described crop observation device may include a position information acquisition unit configured to acquire position information of the mobile body, and the exposure adjustment unit may determine an initial condition relating to adjustment of the exposure, from current position information acquired from the position information acquisition unit and past adjustment information of the exposure at an identical position. Thus, by utilizing past adjustment information, the exposure adjustment can be completed as fast as possible.

A method of controlling a crop observation device according to a second aspect of the present invention is a method of controlling a crop observation device including a camera unit mounted in a mobile body moving in a field and configured to capture an image of a crop being an observation target, in accordance with a movement of the mobile body, and an exposure adjustment unit configured to adjust exposure in the camera unit, and the method includes outputting, by the exposure adjustment unit, a speed change signal for changing a moving speed of the mobile body, based on an adjustment state of the exposure. Furthermore, a control program for a crop observation device according to a third aspect of the present invention is a control program for a crop observation device including a camera unit mounted in a mobile body moving in a field and configured to capture an image of a crop being an observation target, in accordance with a movement of the mobile body, and an exposure adjustment unit configured to adjust exposure in the camera unit, and the control program causes a computer to execute outputting, by the exposure adjustment unit, a speed change signal for changing a moving speed of the mobile body, based on an adjustment state of the exposure. Even by adopting the above-described second and third aspect, an effect similar to the first aspect can be expected.

### ADVANTAGEOUS EFFECTS OF INVENTION

According to the present invention, it is possible to provide a crop observation device and the like capable of preventing an omission in the observation of a targeted agricultural crop, even in a variously changing environment.

### BRIEF DESCRIPTION OF DRAWINGS

FIG. 1 is a conceptual diagram for describing an overview of field management using an IT technique.
FIG. 2 is a conceptual diagram illustrating a state in which a field moving robot including a crop observation device according to the present embodiment moves in a field.
FIG. 3 is a diagram illustrating a system configuration of the crop observation device.
FIG. 4 is a diagram schematically illustrating an example of a captured image.
FIG. 5 is a flowchart for describing a process by the crop observation device.
FIG. 6 is a conceptual diagram illustrating a state in which a field moving robot including a crop observation device according to a first modification moves in a field.
FIG. 7 is a diagram illustrating a system configuration of a crop observation device according to a second modification.
FIG. 8 is a conceptual diagram illustrating a state in which a field moving robot including a crop observation device according to a third modification moves in a field.
FIG. 9 is a diagram illustrating a system configuration of a crop observation device according to a third modification.

### DESCRIPTION OF EMBODIMENTS

Hereinafter, the present invention will be described in the form of embodiments of the invention, but the invention according to the claims is not limited to the following embodiments. Not all of the configurations described in the embodiments are essential to solve the problem.

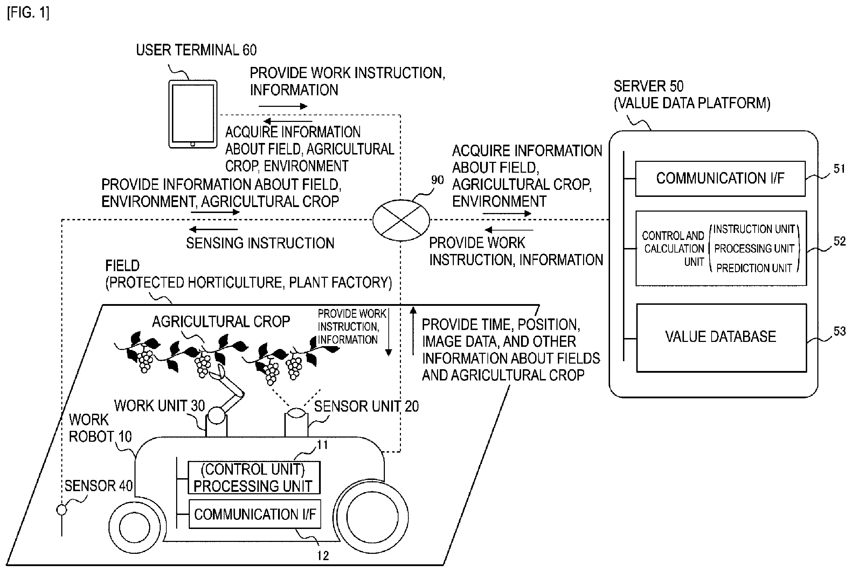

FIG. 1 is a conceptual diagram for describing an overview of field management using an IT technique. A field illustrated in FIG. 1 is a cultivation area where an agricultural crop is cultivated, and is not limited to an outdoor cultivation area, and may be a facility having a roof, such as a protected horticulture and a plant factory.

A work robot 10 is arranged in a field, and autonomously moves in the field or moves in accordance with an operation by a worker. The work robot 10 may include a sensor unit 20 used for observing the growth state or the like of an agricultural crop, and a work unit 30 used for performing work on the agricultural crop or the field. For example, the sensor unit 20 is a crop observation device that observes a targeted agricultural crop, as described later, or a GPS sensor used for identifying the position of the work robot 10. The position of the work robot 10 may be identified by using a method such as simultaneous localization and mapping (SLAM) that compares a detection result obtained by light detection and ranging (LiDAR) or the like with map data. For example, the work unit 30 is a harvesting device that picks fruit having reached the harvest period, or a spraying device that sprays pesticides.

The work robot 10 includes a control unit 11 used for controlling the movement of the work robot 10 and performing a process in cooperation with the sensor unit 20 and the work unit 30 mounted in the work robot 10. The work robot 10 also includes a communication interface (hereinafter, referred to as "communication I/F") 12 used for transmitting and receiving information and instructions to and from a server 50 that manages the field, a user terminal 60 carried by a user, and the like. The control unit 11 receives a work instruction transmitted through a network 90 via the communication I/F 12, and transmits information about the field and the agricultural crop represented by image data obtained from the sensor unit 20, together with information on the time and the position, through the network 90.

A sensor 40 is a measurement device that performs a measurement related to weather conditions such as the temperature, humidity, illuminance, wind direction, and wind speed in the field, and a measurement related to the soil conditions such as the moisture, temperature, nutrient content (EC value), and pH value of the soil. The sensor 40 observes the state of the field and the agricultural crop. The sensor 40 is installed in the field as an appropriate number of sensors 40 in accordance with an observation target. The sensor 40 may be linked to the work robot 10. The sensor 40 acquires observation data in response to a sensing instruction from the server 50 or the user terminal 60 or in accordance with a set sensing period. The observation data acquired by the sensor 40 is transmitted to the server 50 and the user terminal 60 through the network 90 as information about the field, the environment, and the agricultural crop.

The server 50 functions as a management device for comprehensively managing the entire field. Specifically, the server 50 provides a work instruction and/or requested information to the work robot 10, the sensor 40, and the user terminal 60, via a communication I/F 51 and the network 90. Similarly, the server 50 acquires information about the field, the agricultural crop, and the environment from the work robot 10, the sensor 40, and the user terminal 60. A calculation unit 52 performs a control calculation of the entire system. In particular, the calculation unit 52 also serves as an instruction unit that gives an instruction to the work robot 10 and the like, a processing unit that executes various types of processes performed on the acquired information, and a prediction unit that predicts the yield of the agricultural crops or a workload.

A value database 53 is a database used for systematically storing data such as various types of information and analysis results accumulated in the field management. For example, the value database 53 stores agricultural crop data, which is data such as the growth level and the yield of the targeted agricultural crop associated with the past date and position in the field, management data, which is data such as the amount of labor required to perform certain agricultural work, and the like. The server 50 also serves as a value data platform for managing the value database 53.

The user terminal 60 is a tablet terminal or a smartphone carried by a worker who performs agricultural work in a field or a manager who manages the field. The user terminal 60 provides a work instruction and/or requested information to the work robot 10, the sensor 40, and the server 50, through the network 90. Similarly, the user terminal 60 acquires information about the field, the agricultural crop, and the environment from the work robot 10, the sensor 40, and the server 50.

By adopting the field management system having the above-described configuration, a producer can implement farm management having higher productivity. Specifically, it is possible to realize automation of agricultural crop management and processes in order to increase the yield, and growth adjustment and work amount distribution scheduling in order to reduce the work amount of workers.

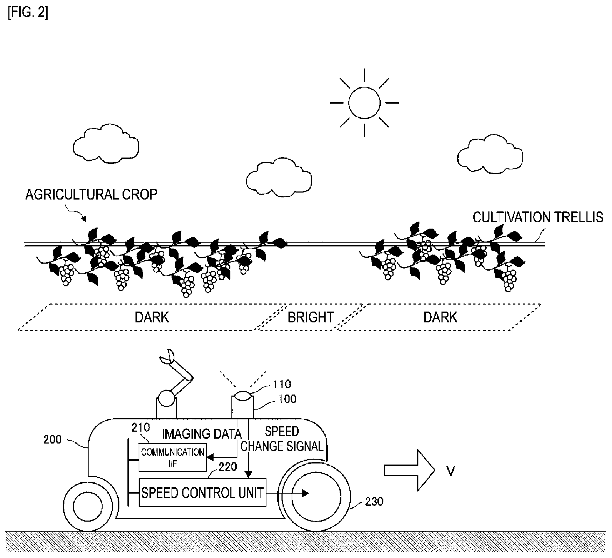

FIG. 2 is a conceptual diagram illustrating a state in which a field moving robot 200 including a crop observation device 100 according to the present embodiment moves in a field. The crop observation device 100 is one aspect of the sensor unit 20, and is mounted in the field moving robot 200. The field moving robot 200 is one aspect of the work robot 10, and is a mobile body that can autonomously move in a field.

The crop observation device 100 is a device that captures an image of an agricultural crop to acquire a captured image, in order to observe the growth state of the agricultural crop cultivated in a field, more specifically, in order for the server 50 to analyze the growth state. In the present embodiment, as an example of an observation target for which the problem is particularly noticeable, an agricultural crop of which a harvested product is a fruit hanging from a cultivation shelf, such as a grape or a kiwi, is assumed. When such an agricultural crop is set as the observation target, a camera unit 110 of the crop observation device 100 is installed in the field moving robot 200 so as to image the agricultural crop from below. In other words, the camera unit 110 is installed so that an optical axis thereof has an elevation angle with respect to a movement direction of the field moving robot 200 (indicated by a hollow arrow in FIG. 2).

In the growth process of an agricultural crop, the stem elongates, leaves grow, and fruits mature. Therefore, assuming that the crop observation device 100 periodically captures an image of the agricultural crop, the ratio of the angle of view occupied by the agricultural crop changes each time. In particular, when the agricultural crop is imaged from below, the angle of view is substantially occupied by the sky, except for the agricultural crop. That is, most of an image region of the captured image generated by the crop observation device 100 is occupied by a crop region and a sky region, and the ratio thereof changes each time the image is captured. Agricultural crops do not grow uniformly on the cultivation shelf, but grow unevenly to some extent in many cases. Therefore, as illustrated in FIG. 2, a location where the agricultural crop is dense is dark and a location where the agricultural crop is sparse is bright. Furthermore, the brightness of the sky region naturally changes depending on the time period when the image is captured and the weather on the day. That is, in a target of which an image is captured by the crop observation device 100, the difference in brightness between regions within the angle of view is great, and the brightness difference changes at each timing in accordance with the conditions.

In order to obtain a captured image with appropriate exposure, the crop observation device 100 executes exposure adjustment for adjusting the exposure of the camera unit 110 prior to an imaging process. However, if the object is an agricultural crop such as the one described above, the time required for determining an appropriate exposure value may be longer than usual. For example, the exposure value to be determined is an aperture value, a shutter speed, and an ISO sensitivity, and the appropriate exposure is realized by a combination thereof. The aperture value corresponds to the size of an aperture opening set when the camera unit 110 includes a variable diaphragm. The shutter speed defines an exposure time, which is a time during which a photoelectric conversion unit of an image sensor accumulates object light. The ISO sensitivity can be replaced with an amplification factor of a photoelectrically converted imaging signal.

The crop observation device 100 continuously acquires a plurality of pre-images while changing the imaging conditions, and detects a change in luminance between the pre-images, to calculate an appropriate exposure value. However, in a case in which a bright sky region and a dark crop region coexist within the angle of view, if normal exposure adjustment for averaging the luminance values within the angle of view is executed, the crop region is adjusted to a considerably dark brightness, due to the influence of the bright sky region. A captured image in which the crop region is processed to a dark brightness is not preferable as an image to be used for a subsequent analysis process or the like, and may cause an erroneous analysis result. Therefore, it is necessary to perform exposure adjustment so that the crop region has appropriate brightness. However, in order to perform such exposure adjustment, the crop observation device 100 requires a greater number of pre-images. Therefore, compared with a case of exposure adjustment in which the brightness difference within the angle of view is within a certain range, the crop observation device 100 requires more time to acquire more pre-images and appropriately adjust the exposure.

If the exposure adjustment takes time, the mobile robot continues to move during the exposure adjustment, and thus, passes by an agricultural crop included in the observation target, so that it is not possible to acquire a captured image of the agricultural crop. If it is not possible to acquire a captured image of even a part of the agricultural crop that is the observation target, it may not be possible to accurately recognize the growth state of the entire field, estimate the yield, and the like, or find a growth defect in a certain location.

Therefore, the crop observation device 100 in the present embodiment outputs, to a speed control unit 220 of the field moving robot 200, a speed change signal for changing a moving speed of the field moving robot 200, based on the exposure adjustment state. That is, when the crop observation device 100 determines that the exposure adjustment takes time, the crop observation device 100 outputs a speed change signal for decreasing a speed V of the field moving robot 200 or stopping the field moving robot 200, to prevent the field moving robot 200 from passing by an agricultural crop included in the observation target. When the speed control unit 220 receives the speed change signal from the crop observation device 100, the speed control unit 220 adjusts a drive signal to a drive wheel 230 to reduce the speed of the field moving robot 200 or stop the field moving robot 200.

After determining the appropriate exposure, the crop observation device 100 accordingly sets the camera unit 110 to cause the camera unit 110 to capture an image, and acquires a captured image. Image data of the acquired captured image is transmitted to the server 50 and the user terminal 60, via a communication I/F 210 of the field moving robot 200.

In the present embodiment, the field moving robot 200 is assumed to be a wheel-type mobile body that employs the drive wheel 230. However, the field moving robot 200 is not limited to the wheel-type mobile body, and may be a crawler-type or leg-walking-type mobile body, or may be a flying-type mobile body such as a drone.

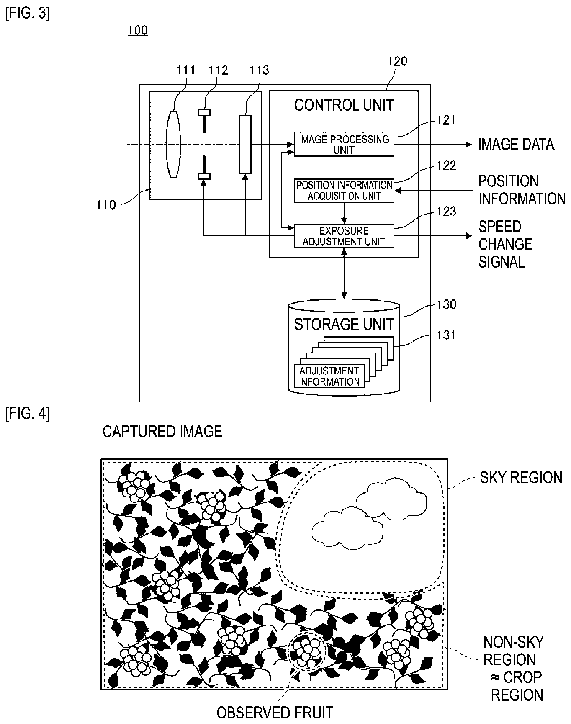

FIG. 3 is a diagram illustrating a system configuration of the crop observation device 100. The crop observation device 100 mainly includes the camera unit 110, a control unit 120, and a storage unit 130. The camera unit 110 includes a lens 111, a variable diaphragm 112, and an image sensor 113. The lens 111 is a lens for forming an object image on an image forming surface of the image sensor 113, and is generally constituted by a plurality of lenses. The lens 111 may include a focus lens that is displaced to adjust the focus, or may include a zoom lens that changes a focal length. If the lens 111 includes the focus lens, the adjustment may be performed so as to focus only on the agricultural crop to be observed. If the lens 111 includes the zoom lens, the adjustment may be performed so as to exclude the sky region.

The variable diaphragm 112 is a mechanism that limits a light flux incident on the lens 111, in accordance with a set aperture value. For example, the image sensor 113 is a CMOS sensor that photoelectrically converts an object image to generate an image signal. The image sensor 113 changes an amplification gain for generating the image signal, in accordance with the set ISO sensitivity.

The control unit 120 is a processor (central processing unit (CPU)) that controls the crop observation device 100 and performs a process to execute a program. The processor may have a configuration to cooperate with an arithmetic processing chip such as an application specific integrated circuit

(ASIC), a graphics processing unit (GPU), and the like. The control unit 120 reads a control program stored in the storage unit 130, to execute control for appropriately acquiring and outputting a crop image of a targeted agricultural crop.

The control unit 120 also functions as a functional calculation unit that performs various calculations, in accordance with a process instructed by the control program. In particular, the control unit 120 may function as an image processing unit 121, a position information acquisition unit 122, and an exposure adjustment unit 123.

The image processing unit 121 receives an image signal output from the image sensor 113, and performs an interpolation process, luminance adjustment, white balance adjustment, and the like as necessary to generate a captured image. When the image processing unit 121 generates a pre-image for performing exposure adjustment, the image processing unit 121 transmits the pre-image to the exposure adjustment unit 123. When the image processing unit 121 generates a crop image of an agricultural crop to be observed, the image processing unit 121 generates image data converted into a predetermined format and outputs the image data to the field moving robot 200. Note that, if the crop observation device 100 includes a communication I/F, the image data may be directly output to the server 50 or the user terminal 60.

The position information acquisition unit 122 acquires position information relating to the current position of the field moving robot 200 in the field, from a GPS sensor or the like included in the field moving robot 200. The acquired position information is transmitted to the exposure adjustment unit 123.

The exposure adjustment unit 123 adjusts the exposure of the camera unit 110. Specifically, the exposure adjustment unit 123 causes the camera unit 110 to continuously execute an imaging process while changing the imaging conditions of the camera unit 110, and sequentially acquires pre-images from the image processing unit 121, to detect a change in luminance between the pre-images, and thereby calculates an appropriate exposure value. At this time, the exposure adjustment unit 123 outputs a speed change signal for changing the moving speed of the field moving robot 200, based on the exposure adjustment state. Specifically, for example, the exposure adjustment unit 123 outputs the speed change signal, when determining that the exposure adjustment is not completed during T₀, where T₀ is an imaging interval for fully acquiring image data of a targeted agricultural crop at a normal moving speed V₀. The speed change signal that is output is a signal for designating a moving speed V_{L} to be decreased or a stop signal for causing the field moving robot 200 to stop, in accordance with the adjustment state of the exposure adjustment.

In accordance with the determined exposure value, the exposure adjustment unit 123 transmits, to the variable diaphragm 112, an aperture control signal for adjusting the aperture value, and transmits, to the image sensor 113, a sensor control signal for adjusting the shutter speed and the ISO sensitivity. The camera unit 110 may not include the variable diaphragm 112, and in this case, the exposure adjustment unit 123 determines appropriate values of the shutter speed and the ISO sensitivity which are adjustment targets, while assuming a fixed aperture value.

The storage unit 130 stores the above-described control program and also stores adjustment information 131 relating to past exposure at each position set in the field. Each piece of adjustment information 131 is expressed by associating an exposure value determined at a certain past position and a certain past time point with the position and the time point, and the pieces constitute an exposure adjustment database in the storage unit 130. The exposure adjustment unit 123 refers to the exposure adjustment database by using, as arguments, the position information acquired via the position information acquisition unit 122, the current time, and the like, and extracts corresponding adjustment information. The exposure adjustment unit 123 refers to the exposure value expressed by the extracted adjustment information, to determine initial conditions relating to the exposure adjustment performed to obtain the pre-image, that is, initial values of the aperture value, the shutter speed, and the ISO sensitivity. At this time, an exposure value determined in order to obtain an immediately preceding captured image may be taken into consideration.

The exposure adjustment will be described in more detail. FIG. 4 is a diagram schematically illustrating an example of a captured image. As described above, when an image of an agricultural crop to be observed is captured from below, the captured image may include a sky region in which the sky appears. The crop region in which the agricultural crop to be observed appears is included in a non-sky region, which is a region other than the sky region, and substantially coincides with the non-sky region.

In a general exposure adjustment, the exposure value is often determined by referring to an average luminance value of the entire pre-image, so that the entire captured image has balanced brightness. When an image is captured by employing the exposure value determined by the above-mentioned exposure adjustment, the crop region is relatively underexposed in the obtained captured image, due to the influence of the bright sky region.

The observation target of the crop observation device 100 is an agricultural crop, and thus, it is desirable that the crop region in the captured image is appropriately exposed. Therefore, the exposure adjustment unit 123 recognizes the sky region from the captured image output by the camera unit 110, and adjusts the exposure so as to prevent the non-sky region other than the sky region from being blacked out. That is, the exposure adjustment unit 123 determines the exposure value so that the non-sky region is not blacked out. When the non-sky region is prevented from being blacked out, the crop observation device 100 can provide the server 50 and the user terminal 60 with a captured image suitable for the purpose of observing the agricultural crop. For example, such a captured image greatly contributes to the accuracy of counting, when the server 50 counts the number of observed fruits by an image determination process.

The exposure adjustment unit 123 can employ various methods as a method of recognizing the sky region in the pre-image output by the camera unit. For example, a region encompassing pixels having luminance values exceeding a ratio serving as a threshold with respect to the average luminance value of the entire pre-image can be determined as the sky region. Alternatively, differences between a plurality of pre-images which are continuously output from the camera unit 110 and captured under different imaging conditions may be detected, and a region that consecutively appears as an overexposed region may be determined as the sky region, for example. Alternatively, the exposure adjustment unit 123 may transmit the pre-image to the user terminal 60, prompt the user to indicate the sky region via the user terminal 60, and receive the indicated region to determine the sky region.

In order to more correctly recognize the sky region, the exposure adjustment unit 123 may acquire additional information to correct the recognized sky region. Specifically, the exposure adjustment unit 123 can correct the recognized sky region, based on an index designated by the user in relation to the observed crop appearing in the pre-image. For example, when the number of observed fruits to be counted is defined as an index, the exposure adjustment unit 123 can correct the width of the sky region, so that a number that is automatically counted by the image determination process coincides with a designated number that is counted by the user who visually recognizes the pre-image displayed on the user terminal 60.

As described above, the exposure adjustment unit 123 may perform exposure adjustment so as to prevent the non-sky region from being blacked out. Alternatively, the exposure adjustment unit 123 may focus on the sky region and adjust the exposure while overexposure of the sky region is permitted, to prevent the non-sky region from being blacked out as a result. That is, the exposure adjustment unit 123 may relax the exposure adjustment conditions so that overexposure of the sky region is permitted, to determine the exposure value. In the above-described example, the exposure adjustment unit 123 adjusts the exposure so that the non-sky region is not blacked out. However, in a case in which the observation target is further narrowed down within the non-sky region, for example, in a case in which a fruit to be harvested or a discolored part in which a growth defect occurs is set as the observation target, the exposure adjustment unit 123 may adjust the exposure so that the region of the observation target is not blacked out.

In the above-described example, it is assumed that the agricultural crop is imaged during the daytime, but the agricultural crop may be imaged during the nighttime. When the agricultural crop is imaged at nighttime, the agricultural crop to be observed is illuminated by the lighting, and thus, the brightness difference within the angle of view is large. Thus, in order to acquire an appropriate image, it is expected that it takes time to adjust the exposure until imaging is executed. If imaging is performed at nighttime, the exposure may be adjusted, while allowing the sky region to be blacked out. Conversely, illuminated agricultural crops are likely to cause overexposure. However, it is preferable to adjust the exposure so as not to cause overexposure in the non-sky region.

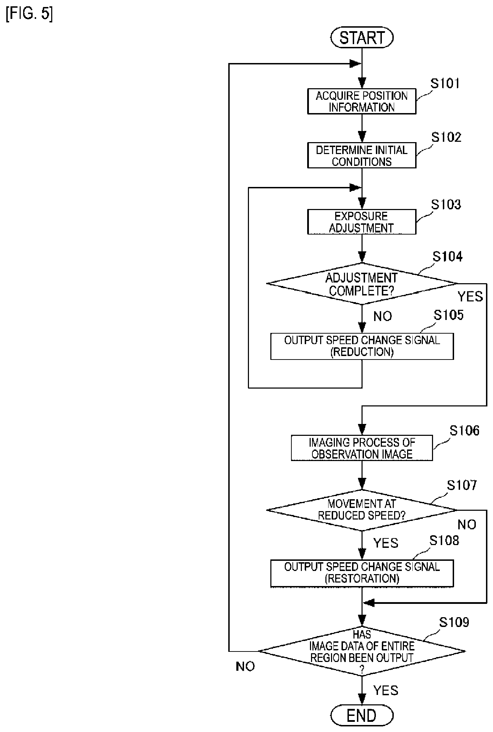

Next, a procedure of a process executed by the control unit 120 of the crop observation device 100 will be described. FIG. 5 is a flowchart for describing the procedure of the process. The process flow starts from a timing when the field moving robot 200 starts moving and the crop observation device 100 is about to start capturing an image of the agricultural crop to be observed.

In step S101, the position information acquisition unit 122 acquires the position information at the current timing, and transmits the position information to the exposure adjustment unit 123. In step S102, the exposure adjustment unit 123 extracts the adjustment information 131 corresponding to the received position information and the current time, from the storage unit 130, and determines initial conditions relating to the exposure adjustment performed to obtain a pre-image. At this time, if the captured image to be output to the field moving robot 200 as the image data is processed immediately in advance, the initial conditions may be determined in consideration of an exposure value determined to obtain the captured image.

Subsequently, in step S103, the exposure adjustment unit 123 causes the camera unit 110 to continuously output pre-images, while sequentially changing the imaging conditions from the determined initial conditions, and adjusts the exposure in accordance with luminance information obtained from the pre-images. Specifically, the exposure adjustment unit 123 executes an arithmetic process for determining an appropriate value. When a time set in advance has elapsed, the exposure adjustment unit 123 proceeds to step S104 and confirms whether the exposure adjustment is completed. If the exposure adjustment is not completed, the processing proceeds to step S105, and the exposure adjustment unit 123 outputs a speed change signal requesting decrease in the moving speed, to the speed control unit 220 of the field moving robot 200. Afterwards, the processing returns to step S103, and the exposure adjustment unit 123 continues to adjust the exposure. If it is determined in step S104 that the exposure adjustment is completed, the processing proceeds to step S106. Note that, when the exposure adjustment is completed in step S103, the exposure adjustment unit 123 may proceed to step S104, without waiting for the set time to elapse, and may immediately proceed to step S106.

Note that, by repeatedly performing step S105 in accordance with the delay of the exposure adjustment as described above, the moving speed of the field moving robot 200 can be gradually reduced. By gradually reducing the moving speed in this manner, it is possible to secure a balance between the acquisition of image data without omission and the work efficiency. However, the request for reducing the moving speed is not limited to such a gradual request. For example, if reliable acquisition of image data is emphasized, a speed change signal for requesting a stop may be output immediately when it is determined that it takes time to adjust the exposure.

The exposure adjustment unit 123 proceeds to step S106, and controls the variable diaphragm 112 and the image sensor 113 according to the determined exposure value, and causes the camera unit 110 to execute a process of imaging an observation image. If the observation image acquired here is not an image having appropriate exposure, the processing may be performed again, starting from the exposure adjustment. Subsequently, the processing proceeds to step S107, and the exposure adjustment unit 123 determines whether the field moving robot 200 is moving at reduced speed due to the speed change signal requesting a speed reduction that has been output previously. When determining that the field moving robot 200 is moving at reduced speed, the exposure adjustment unit 123 proceeds to step S108, and outputs, to the speed control unit 220 of the field moving robot 200, a speed change signal for gradually restoring the moving speed, until the predetermined speed set in the field moving robot 200 is reached. Subsequently, the processing proceeds to step S109. In step S107, when it is determined that the field moving robot 200 is moving at the predetermined speed set in the field moving robot 200, step S108 is skipped and the processing proceeds to step S109.

In step S109, the control unit 120 confirms whether image data of the entire region of an imaging target designated by the server 50 or the field moving robot 200 is output. If a region to be imaged remains, the processing returns to step S101, and the series of processes is continuously executed. If the image data is completely output for the entire region, the series of processes is terminated. The control unit 120 may terminate the series of processes when receiving an end instruction signal from the server 50 or the field moving robot 200.

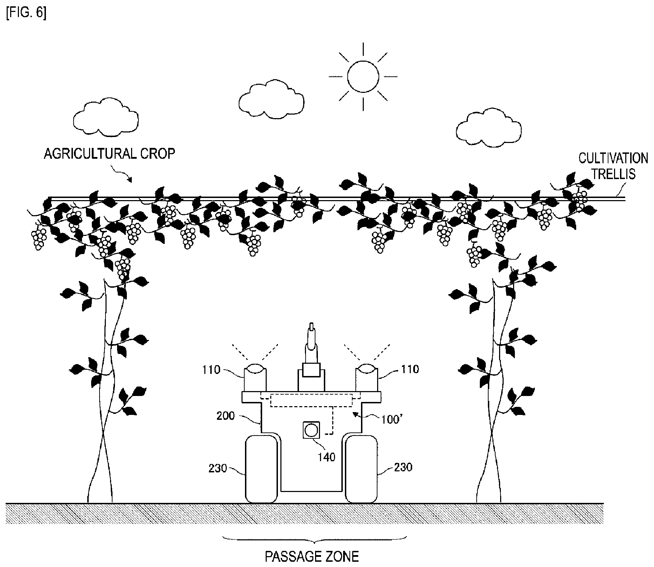

Next, another example, which is a modification of the crop observation device 100, will be described. FIG. 6 is a conceptual diagram illustrating a state in which the field moving robot 200 including a crop observation device 100' according to an example of a first modification moves in a field. FIG. 2 illustrates a state in which the field moving robot 200 is viewed from the side. However, FIG. 6 illustrates a state in which the field moving robot 200 is viewed from the front. Note that, except for the content described below, the configuration of the crop observation device 100' is similar to that of the crop observation device 100, and thus, the description thereof will be omitted unless otherwise specified.

When the work robot 10 is operated in a field, a passage zone where the work robot 10 moves is generally provided. The passage zone is also utilized as a passage in which the worker moves. The agricultural crops are placed on both sides or on one side of the passage zone. As illustrated in FIG. 6, in a case where the agricultural crops are provided on both sides of the passage zone, if the agricultural crop on the right side and the agricultural crop on the left side with respect to a traveling direction of the field moving robot 200 moving in the passage zone can be imaged in parallel, image data of all agricultural crops can be acquired in a shorter time or with higher definition. Therefore, the crop observation device 100' includes two camera units, that is, a camera unit 110 that captures an image of the agricultural crop on the right side with respect to the traveling direction and a camera unit 110 that captures an image of the agricultural crop on the left side.

In a configuration including the two camera units 110 as described above, the exposure adjustment unit 123 individually adjusts the exposure of each of the camera units 110. That is, the exposure adjustment unit 123 adjusts the exposure so that appropriate exposure is achieved for the agricultural crop that is the object to be captured by each camera unit 110. At this time, when it takes time to adjust the exposure in at least one of the camera units 110, the exposure adjustment unit 123 outputs a speed change signal for decreasing the moving speed of the field moving robot 200.

On the other hand, the image processing unit 121 applies a common fixed white balance to the image signal transmitted from each of the camera units 110 to generate a captured image. That is, the captured image is generated by using a white balance value as a fixed value set in advance. This process allows the captured images obtained from the camera units 110, to be images that are adjusted to have appropriate exposure for the agricultural crops which are objects and a common color tone. If the image data used by the server 50 to analyze the growth state and the like is generated from such a captured image, it can be expected that the occurrence rate of errors is low and an analysis result having higher accuracy can be obtained. The number of camera units 110 included in the crop observation device 100' is not limited to two, and may be three or more. When agricultural crops to be observed are imaged by a large number of camera units 110 in a shared manner, image data of all the agricultural crops can be acquired in a shorter time or with higher definition.

The crop observation device 100' may include an illuminance sensor 140 installed at the front of the field moving robot 200. When the above-described illuminance sensor 140 is provided, information relating to the brightness in the movement direction of the field moving robot 200 can be acquired in advance. Therefore, the exposure adjustment unit 123 can more accurately determine the initial conditions relating to the exposure adjustment performed to obtain the pre-image. Consequently, the time required for the exposure adjustment can be shortened. The illuminance sensor 140 may be a front observation camera unit provided for the field moving robot 200 to acquire environment information in front of the field moving robot 200. In this case, the exposure adjustment unit 123 may directly receive the captured image output by the front observation camera unit or may receive information relating to the brightness extracted from the captured image.

In the above-described aspect of the crop observation devices 100 and 100', the control unit 120 and the storage unit 130 are also mounted in the field moving robot 200, together with the camera unit 110. However, in another aspect of the crop observation devices 100 and 100', at least a part of these units, except for the camera unit 110, may be incorporated in the server 50 or another external device. In this case, the camera unit 110 may transmit and receive a control signal and an image signal to and from the control unit 120 via radio communication, for example. Alternatively, the crop observation devices 100 and 100' may be integrated with the field moving robot 200. In this case, the camera unit 110 may have a function of a camera unit that recognizes the surrounding environment so that the field moving robot 200 can move.

The exposure adjustment unit 123 described above outputs the speed change signal for decreasing the moving speed when determining that it takes time to adjust the exposure. However, the configuration is not limited thereto, and the exposure adjustment unit 123 may output the speed change signal for decreasing the moving speed when the determined shutter speed is lower than a predetermined shutter speed. By suppressing the moving speed of the field moving robot in this manner, a reduction in the blur of the captured image to be acquired can be expected.

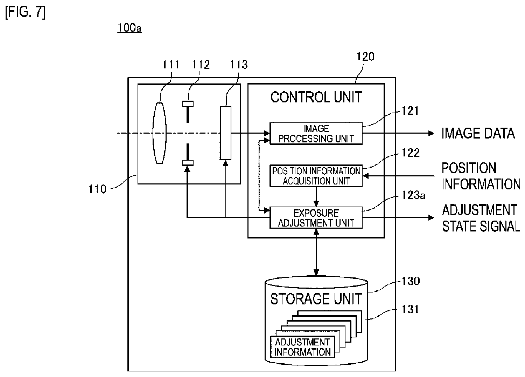

Still another example will be described. FIG. 7 is a diagram illustrating a system configuration of a crop observation device 100a according to a second modification. The crop observation device 100a is different from the crop observation device 100 in that the exposure adjustment unit 123 of the crop observation device 100 outputs the speed change signal for changing the moving speed of the field moving robot 200, based on the exposure adjustment state, whereas the crop observation device 100a includes an exposure adjustment unit 123a that outputs an adjustment state signal relating to the exposure adjustment state. Other parts of the configuration are similar to the ones in the configuration described with reference to FIG. 3.

The exposure adjustment unit 123a adjusts the exposure of the camera unit 110. Specifically, the exposure adjustment unit 123a causes the camera unit 110 to continuously execute an imaging process while changing the imaging conditions of the camera unit 110, and sequentially acquires pre-images from the image processing unit 121, to detect a change in luminance between the pre-images, and thereby calculates an appropriate exposure value. At this time, the exposure adjustment unit 123a outputs an adjustment state signal relating to the exposure adjustment state, to the speed control unit 220 of the field moving robot 200.

For example, if the exposure value is determined within a specific time not resulting in a problem in the imaging process, the adjustment state signal is "0" indicating that the adjustment is completed. If the exposure value is not determined within the specific time, the adjustment state signal is "1" indicating that the adjustment is not completed. The specific time may be a constant time set in advance, or may be a time that can change in accordance with the moving speed of the field moving robot 200.

When the speed control unit 220 receives the adjustment state signal indicating "0", the speed control unit 220 adjusts the moving speed to a moving speed set in advance or a moving speed in accordance with the state of the surrounding environment and the like, regardless of the movement state of the crop observation device 100. On the other hand, when receiving the adjustment state signal indicating "1", the speed control unit 220 reduces the moving speed to a speed set in advance or causes the field moving robot 200 to stop. The adjustment state signal in a case in which it is not possible to determine the exposure value within the specific time may be set in a stepwise manner. For example, the exposure adjustment unit 123a may determine the difficulty of determining the exposure value from a state such as a low contrast or a rapid change in luminance of the pre-image, and output an adjustment state signal in five stages from "1" to "5" in accordance with the difficulty. The speed control unit 220 can further decrease the moving speed, as the numerical value of the received adjustment state signal increases.

The exposure adjustment unit 123a is similar to the exposure adjustment unit 123 with regard to the process of transmitting, to the variable diaphragm 112, an aperture control signal for adjusting the aperture value, and transmitting, to the image sensor 113, a sensor control signal for adjusting the shutter speed and the ISO sensitivity, in accordance with the determined exposure value. The processing steps to adjust the exposure value described above are also similar to the processing steps executed by the exposure adjustment unit 123.

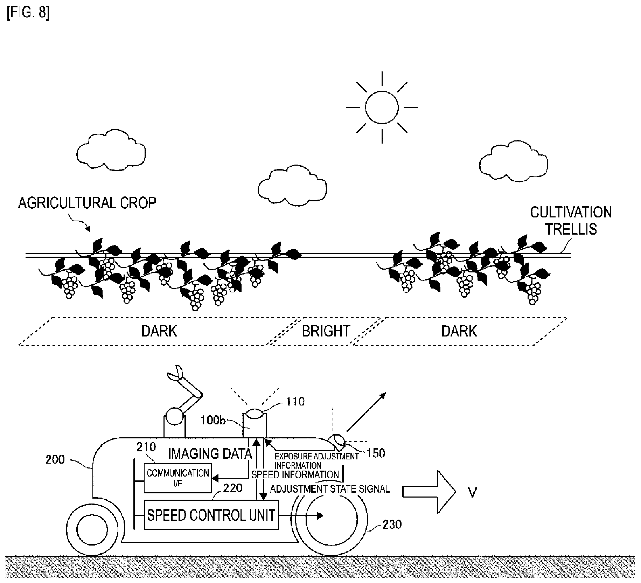

FIG. 8 is a conceptual diagram illustrating a state in which the field moving robot 200 including a crop observation device 100b according to a third modification moves in a field. The field moving robot 200 includes an auxiliary camera unit 150 that captures an image of a crop located in a movement direction (forward direction indicated by a hollow arrow) earlier than the camera unit 110. The auxiliary camera unit 150 includes an exposure adjustment unit, determines an exposure value for capturing an image of a crop located in the movement direction, executes an imaging process, and transmits the exposure value to the crop observation device 100b as exposure adjustment information.

The crop observation device 100b acquires speed information relating to the current moving speed, from the speed control unit 220 of the field moving robot 200. The crop observation device 100b transmits, to the speed control unit 220, an adjustment state signal similar to that of the crop observation device 100a. Other parts of the configuration are similar to the configuration described with reference to FIG. 2, and thus, detailed description thereof will be omitted.

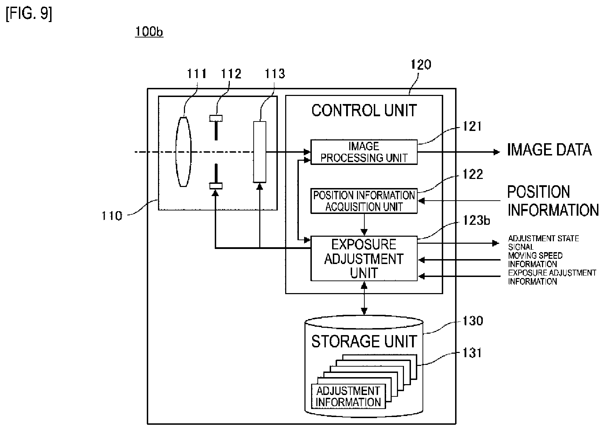

FIG. 9 is a diagram illustrating a system configuration of the crop observation device 100b according to the third modification. The crop observation device 100b is different from the crop observation device 100a according to the second modification in that an exposure adjustment unit 123b adjusts the exposure by using exposure adjustment information transmitted from the auxiliary camera unit 150 and moving speed information transmitted from the speed control unit 220. Other parts of the configuration are similar to the ones in the configuration described with reference to FIGS. 3 and 7.

Specifically, the exposure adjustment unit 123b uses the moving speed information transmitted from the speed control unit 220 to calculate a timing at which the camera unit 110 captures an image of the crop imaged by the auxiliary camera unit 150. An exposure reference value of the exposure adjustment in the imaging process at the timing is set to an exposure value included in the exposure adjustment information transmitted from the auxiliary camera unit 150. Thus, by referring to the exposure value of the auxiliary camera unit 150 that captures an image of the observation target first, the exposure value to be applied in the camera unit 110 can be determined more quickly and appropriately.

The exposure adjustment information may not be the exposure value, and may be, for example, an EV value calculated by the auxiliary camera unit 150 or sample image data in which pixels are thinned out. Such information can also be reference information used for determining the above-described exposure reference value in advance. In the example illustrated in FIG. 9, similarly to the above-described exposure adjustment unit 123a, the exposure adjustment unit 123b outputs an adjustment state signal to the speed control unit 220. However, the exposure adjustment unit 123b may output a speed change signal, similarly to the exposure adjustment unit 123. In this case, the speed control unit 220 changes the moving speed in accordance with the received speed change signal.

The exposure adjustment unit 123b adjusts and determines the exposure value within a limited range (for example, a range within plus and minus two stages) with respect to the determined exposure reference value, for example. The exposure adjustment unit 123b is similar to the exposure adjustment unit 123 with regard to the process of transmitting, to the variable diaphragm 112, an aperture control signal for adjusting the aperture value, and transmitting, to the image sensor 113, a sensor control signal for adjusting the shutter speed and the ISO sensitivity, in accordance with the determined exposure value. The processing steps to adjust the exposure value described above are also similar to the processing steps executed by the exposure adjustment unit 123.

Here, main parts of a configuration of the crop observation device, the method of controlling a crop observation device, and the control program for a crop observation device described above will be summarized.

### Supplementary Note 1

A crop observation device (100, 100', 100a, 100b) includes:
a camera unit (110) mounted in a mobile body (200) moving in a field, the camera unit being configured to capture an image of a crop being an observation target, in accordance with a movement of the mobile body, and
an exposure adjustment unit (123, 123a, 123b) configured to adjust exposure in the camera unit, in which
the exposure adjustment unit outputs a speed change signal for changing a moving speed of the mobile body or an adjustment state signal relating to an adjustment state of the exposure, based on the adjustment state of the exposure.

### Supplementary Note 2

The crop observation device according to Supplementary Note 1, in which the exposure adjustment unit is configured to recognize a sky region in which a sky is imaged, from a captured image output by the camera unit, and allow overexposure of the sky region to adjust the exposure.

### Supplementary Note 3

The crop observation device according to Supplementary Note 1, in which the exposure adjustment unit is configured to recognize a sky region in which a sky is imaged, from a captured image output by the camera unit, and adjust the exposure while preventing a non-sky region other than the sky region from being blacked out.

### Supplementary Note 4

The crop observation device according to Supplementary Note 2, in which the exposure adjustment unit is configured to recognize the sky region by detecting a difference between a plurality of the captured images captured using different imaging conditions and continuously output by the camera unit.

### Supplementary Note 5

The crop observation device according to Supplementary Note 2, in which the exposure adjustment unit is configured to correct the recognition of the sky region, based on an indicated region indicated by a user with respect to the captured image.

### Supplementary Note 6

The crop observation device according to Supplementary Note 2, in which the exposure adjustment unit is configured to correct the recognition of the sky region, based on an index designated by a user in relation to the crop appearing in the captured image.

### Supplementary Note 7

The crop observation device according to Supplementary Note 1, including:
a plurality of the camera units, and
an image processing unit (121) configured to set a fixed white balance common to the plurality of camera units, in which
the exposure adjustment unit is configured to individually adjust the exposure in each of the camera units.

### Supplementary Note 8

The crop observation device according to Supplementary Note 1, including:
an illuminance sensor (140) configured to acquire illuminance information in a movement direction of the mobile body, in which
the exposure adjustment unit is configured to adjust the exposure by using the illuminance information.

### Supplementary Note 9

The crop observation device according to Supplementary Note 1, including:
a position information acquisition unit (122) configured to acquire position information of the mobile body, in which
the exposure adjustment unit is configured to determine an initial condition relating to adjustment of the exposure, from current position information acquired from the position information acquisition unit and past adjustment information (131) of the exposure at an identical position.

### Supplementary Note 10

A method of controlling a crop observation device (100, 100', 100a, 100b), the crop observation device including a camera unit (110) mounted in a mobile body (200) moving in a field, the camera unit being configured to capture an image of a crop being an observation target, in accordance with a movement of the mobile body, and an exposure adjustment unit (123, 123a, 123b) configured to adjust exposure in the camera unit, the method including:
outputting, by the exposure adjustment unit, a speed change signal for changing a moving speed of the mobile body or an adjustment state signal relating to an adjustment state of the exposure, based on the adjustment state of the exposure.

### Supplementary Note 11

A control program for a crop observation device (100, 100', 100a, 100b), the crop observation device including a camera unit (110) mounted in a mobile body (200) moving in a field, the camera unit being configured to capture an image of a crop being an observation target, in accordance with a movement of the mobile body, and an exposure adjustment unit (123, 123a, 123b) configured to adjust exposure in the camera unit, the control program causing a computer to execute:
outputting, by the exposure adjustment unit, a speed change signal for changing a moving speed of the mobile body or an adjustment state signal relating to an adjustment state of the exposure, based on the adjustment state of the exposure.

### Supplementary Note 12

The crop observation device according to Supplementary Note 1, in which the exposure adjustment unit (123b) is configured to acquire exposure adjustment information relating to exposure adjusted for an auxiliary camera unit (150) configured to capture an image of the crop located in a movement direction of the mobile body earlier than the camera unit, and adjust exposure in the camera unit, based on the exposure adjustment information.

## Claims

1. A crop observation device, comprising:
a camera unit mounted in a mobile body moving in a field, the camera unit being configured to capture an image of a crop being an observation target, in accordance with a movement of the mobile body; and
an exposure adjustment unit configured to adjust exposure in the camera unit, wherein
the exposure adjustment unit outputs a speed change signal for changing a moving speed of the mobile body or an adjustment state signal relating to an adjustment state of the exposure, based on the adjustment state of the exposure.

2. The crop observation device according to claim 1, wherein the exposure adjustment unit is configured to recognize a sky region in which a sky is imaged, from a captured image output by the camera unit, and allow overexposure of the sky region to adjust the exposure.

3. The crop observation device according to claim 1, wherein the exposure adjustment unit is configured to recognize a sky region in which a sky is imaged, from a captured image output by the camera unit, and adjust the exposure while preventing a non-sky region other than the sky region from being blacked out.

4. The crop observation device according to claim 2, wherein the exposure adjustment unit is configured to recognize the sky region by detecting a difference between a plurality of the captured images captured using different imaging conditions and continuously output by the camera unit.

5. The crop observation device according to claim 2, wherein the exposure adjustment unit is configured to correct the recognition of the sky region, based on an indicated region indicated by a user with respect to the captured image.

6. The crop observation device according to claim 2, wherein the exposure adjustment unit is configured to correct the recognition of the sky region, based on an index designated by a user in relation to the crop appearing in the captured image.

7. The crop observation device according to claim 1, comprising:
a plurality of the camera units; and
an image processing unit configured to set a fixed white balance common to the plurality of camera units, wherein
the exposure adjustment unit is configured to individually adjust the exposure in each of the camera units.

8. The crop observation device according to claim 1, comprising:
an illuminance sensor configured to acquire illuminance information in a movement direction of the mobile body, wherein
the exposure adjustment unit is configured to adjust the exposure by using the illuminance information.

9. The crop observation device according to claim 1, comprising:
a position information acquisition unit configured to acquire position information of the mobile body, wherein
the exposure adjustment unit is configured to determine an initial condition relating to adjustment of the exposure, from current position information acquired from the position information acquisition unit and past adjustment information of the exposure at an identical position.

10. A method of controlling a crop observation device, the crop observation device including a camera unit mounted in a mobile body moving in a field, the camera unit being configured to capture an image of a crop being an observation target, in accordance with a movement of the mobile body, and an exposure adjustment unit configured to adjust exposure in the camera unit, the method comprising:
outputting, by the exposure adjustment unit, a speed change signal for changing a moving speed of the mobile body or an adjustment state signal relating to an adjustment state of the exposure, based on the adjustment state of the exposure.

11. A control program for a crop observation device, the crop observation device including a camera unit mounted in a mobile body moving in a field, the camera unit being configured to capture an image of a crop being an observation target, in accordance with a movement of the mobile body, and an exposure adjustment unit configured to adjust exposure in the camera unit, the control program causing a computer to execute:
outputting, by the exposure adjustment unit, a speed change signal for changing a moving speed of the mobile body or an adjustment state signal relating to an adjustment state of the exposure, based on the adjustment state of the exposure.

12. The crop observation device according to claim 1, wherein the exposure adjustment unit is configured to acquire exposure adjustment information relating to exposure adjusted for an auxiliary camera unit configured to capture an image of the crop located in a movement direction of the mobile body earlier than the camera unit, and adjust exposure in the camera unit, based on the exposure adjustment information.
